# EUROPEAN PATENT APPLICATION

(11) **EP 4 497 955 A1**
(43) Date of publication of application: **29.01.2025**
(21) Application number: 23187996.6
(22) Date of filing: 27.07.2023
(51) Int. Cl.: F15B 15/14, F15B 15/28, F16H 63/30

(54) **PNEUMATIC ACTUATOR WITH MAGNETIC POSITION SENSOR**

(71) Applicant: ZF CV Systems Global GmbH, 3006 Bern (CH)
(72) Inventor: BIERNAT, Marcin, 57-441 Bozkow (PL)
(74) Representative: Ohlendorf, Henrike

(57) **Abstract**

The invention relates to a pneumatic actuator (1) including a pneumatic cylinder (4) comprising a pneumatic chamber (10) having a central axis (A), a pneumatic piston (6) slidably received in the pneumatic chamber (10), a magnetic position sensor (56) for detecting a relative position of the pneumatic piston (6) to the pneumatic cylinder (4); and a magnet (58) cooperating with the magnetic position sensor (56). The magnet (58) is relatively fixed to the piston head (16) at least in an axial direction (R4) along the central axis (A) and at least partially rotatable relative to the piston head (16) about the central axis (A), wherein the pneumatic actuator (1) further comprises a magnet guide (64) for rotationally aligning the magnet with the magnetic position sensor (56). The invention further relates to an assembly method (100) for a pneumatic actuator (1), a gearbox (200) and a commercial vehicle (300).

## Description

The invention relates to a pneumatic actuator for actuating a functional element. The pneumatic actuator includes a pneumatic cylinder comprising a pneumatic chamber having a central axis, a pneumatic piston for actuating the functional element, the pneumatic piston comprising a piston head slidably received in the pneumatic chamber, and a piston rod for connecting the piston head to the functional element, a magnetic position sensor for detecting a relative position of the pneumatic piston to the pneumatic cylinder; and a magnet cooperating with the magnetic position sensor.

In vehicles, in particular in commercial vehicles, there are multiple ways of implementing an automatic transmission. Besides automated gearboxes, automated manual transmission (AMT) systems are often used. AMT systems comprise a traditional manual transmission gearbox that is automatically actuated by one or more pneumatic actuators. The pneumatic actuators are connected to functional elements, for example to shifting forks. Upon actuation of the pneumatic actuator, a gear is shifted without a manual actuation of a gearshift lever by a vehicle driver.

Generally, pneumatic actuators comprise a pneumatic cylinder and a pneumatic piston. The pneumatic piston is movable relative to the pneumatic cylinder. Upon movement, the piston actuates the functional element connected to the piston. For initiating such a movement of the piston, a piston head of the pneumatic piston is received in a pneumatic chamber. The pneumatic chamber may be defined by a cylinder body of the pneumatic cylinder. The pneumatic piston is slidably received in the pneumatic chamber and movable back and forth along a central axis of the pneumatic chamber. When a pressure in the pneumatic chamber or a section thereof is increased, the pneumatic piston is pushed in a positive stroke direction and a volume enclosed by the pneumatic piston and the pneumatic chamber (or the respective section of the pneumatic chamber) is increased. A piston rod connected to the piston head protrudes out of the pneumatic chamber and actuates the functional element. By reducing the pressure and/or by applying a counter pressure to a second portion of the pneumatic chamber, the piston can be moved into the pneumatic chamber performing a negative stroke in a negative stroke direction.

The functional element connected to the pneumatic actuator needs to be precisely actuated in order to reduce wear on gearbox components. For automatically controlling the actuator, accurate information on a relative position of the piston with regard to the pneumatic cylinder is required. Therefore, pneumatic actuators comprise a position sensor for detecting a relative position of the pneumatic piston to the pneumatic cylinder. Magnetic position sensors are often of the Hall sensor type. The magnetic position sensor is adapted to detect a magnet cooperating with said sensor. If the distance of the magnet with regard to the magnet sensor changes, a corresponding signal is provided by the magnetic sensor. By attaching the magnet to the pneumatic piston, a relative position of the piston to the pneumatic cylinder can be derived from the sensor signal. The signal may be used to differentiate between multiple piston positions and/or may correspond to a relative distance between the magnet and the magnet position sensor.

Components of the actuator, in particular ferromagnetic components, arranged between the magnet and the sensors as well as great distances between the magnet and the sensor have an influence on a signal strength and/or accuracy of the signal provided by the magnetic position sensor. By arranging the magnet on a peripheral surface of the piston head and the magnetic position sensor on a corresponding section of an outer wall of the cylinder body, a distance between the magnet and the magnetic position sensor is kept small. For receiving the magnet, the piston head may comprise a cavity on the circumferential surface. The magnet is received in that cavity and protected therein. However, the magnet and the piston need to be exactly positioned relative to the magnetic position sensor in order to allow correct measurements. This results in increased assembly cost and an increased potential for functional and/or assembly errors. Moreover, the need to insert the pneumatic piston in a predetermined angular orientation limits the possible use cases of the actuator. To allow for a certain flexibility, large magnets that span a large circumferential section of the piston are used. Such large magnets allow partial rotation of the piston while ensuring close proximity of the magnet to the magnetic position sensor. A disadvantage of large magnets is that they increase the overall cost of the actuator, as magnets are often made from rare metals and/or rare earths.

EP 3 971 424 A1 discloses a pneumatic actuator having a ring magnet that is point symmetrically arranged to the central axis and mounted centrally on a first front face of the piston head, perpendicular to the central axis. Through this, the magnetic sensor can measure the position of the piston irrespective of the pistons angular orientation. However, large ring shaped magnets are required, which increase overall cost of the pneumatic actuator.

It is therefore an object of the invention to provide a cost efficient pneumatic actuator that facilitates assembly and/or allows flexible use.

To solve this object, the present invention proposes in a first aspect that the magnet is fixed relatively to the piston head at least in an axial direction along the central axis and at least partially rotatable relative to the piston head about the central axis, wherein the pneumatic actuator further comprises a magnet guide, the magnet guide comprising at least one primary guide element and a corresponding secondary guide element cooperating with the primary guide element for rotationally aligning the magnet with the magnetic position sensor.

A magnet fixed relatively to the piston head in the axial direction travels along the central axis of the pneumatic chamber together with the piston head. The axially fixed magnet indicates the relative position of the piston head in the pneumatic chamber. The magnet is substantially inhibited from moving along the central axis of the pneumatic chamber independently of the piston head. According to the invention, the magnet is at least partially rotatable relative to the piston head about the central axis. The piston head and the magnet can at least partially rotate relative to each other about the central axis. For example, the magnet can be rotated about the central axis and relative to the piston head over a range from more than 0° to 180°. Within the limits of this relative rotation, the magnet can be aligned with respect to the magnetic position sensor independently of the pneumatic piston or the piston head can be oriented independently of the magnet respectively. For example and preferably, the piston head can be received in the pneumatic chamber in two or more separate angular positions through rotation of the piston head relative to the magnet. In all of the angular positions of the piston head, the angular position of the magnet relative to the magnetic position sensor may be the same.

The magnet guide is configured to align the magnet with the magnetic position sensor. Preferably, the magnet guide prevents rotation of the magnet about the central axis. Rotational alignment of the magnet allows for movement of the magnet along the central axis but prevents rotation of the magnet about the central axis relative to the magnetic position sensor. Preferably, the primary and secondary guide elements cooperate with each other for rotationally aligning the magnet with the magnetic position sensor. Preferably, the primary guide elements are associated to the magnet and the secondary guide elements are associated to the pneumatic cylinder. For example, the secondary guide element can be formed as or comprise a guide groove extending parallel to the central axis in a cylinder wall of the pneumatic cylinder. The primary guide element can be formed as or comprise a guide pin, protrusion, extension or the like received in the guide groove such that it may slide along the groove in the axial direction but is inhibited from rotating out of the groove in a direction perpendicular to the central axis. In some embodiments, the magnet guide may comprise only primary or only secondary guide elements.

A magnet that is at least partially rotatable relative to the piston head can be configured to rotate relative to the piston head in a range from more than 0° to 360°, preferably more than 0° to 180°, preferably 5° to 180°, preferably 10° to 90°, preferably 15° to 90°, preferably 15° to 75°, preferably 15° to 60°, preferably 30° to 60°. A magnet rotatable relative to the piston head by 90° may be rotated relative to the piston head about the central axis by 90° or the piston head may rotate relative to the magnet about the central axis by the same amount. This facilitates alignment of the magnet with the magnetic position sensor. Furthermore, the piston may inserted into the pneumatic chamber in different angular orientations while the magnet and the magnetic position sensor remain aligned. Preferably, the magnet can be aligned to the magnetic position sensor and the piston head can be inserted in a first angular orientation or a second angular orientation differing from the first angular orientation by e.g. 30°. A pneumatic actuator allowing for multiple orientations of the pneumatic piston, is usable for different use cases or actuation of different functional elements with little or no adaptations.

The functional element preferably is a functional element of a gearbox, preferably a gearbox of a commercial vehicle. Preferably, the pneumatic actuator is configured for actuating a shifting fork of a gearbox of a commercial vehicle such as a truck or bus. Preferably, the magnet is a permanent magnet, particularly preferred a Neodym, Bismanol and/or AlNiCo-magnet. Preferably, the magnet has a magnetic flux density of 1000 mT to 2000 mT, preferably 1200 mT to 1500 mT, further preferred 1300 mT to 1400 mT. The magnet preferably has an angular length of 90° or less, preferably 60° or less, preferably 45° or less, preferably 40° or less, preferably 35° or less, preferably 30° or less, preferably 25° or less, preferably 20° or less, preferably 15° or less, preferably 10° or less. The angular length is the angle between a first radial line connecting a first end of the magnet to the central axis and a second radial line connecting an opposite second end of the magnet to the central axis. Preferably, the lines are defined in the same cross-section perpendicular to the central axis. For example, a magnet having an angular length of 90° may have the shape of a quarter circle or a corresponding quarter segment of a ring. Magnets having a smaller angular length are usually cheaper, since less material is required for manufacturing.

In a first preferred embodiment, the pneumatic piston comprises a guide ring for guiding the piston head in the pneumatic chamber, wherein the magnet is fixed to the guide ring and the guide ring is relatively fixed to the piston head in the axial direction and at least partially rotatable relative to the piston head about the central axis. In this preferred embodiment, axial fixation of the magnet to the piston head is achieved by the guide ring. During axial movement of the piston head within the pneumatic cylinder and along the central axis, the guide ring slides along a corresponding inner cylinder wall of the pneumatic cylinder defining the pneumatic chamber. It shall be noted that a small clearance may be arranged in between the guide ring and the inner cylinder wall. The guide ring prevents tilting of the piston head relative to the central axis or within the pneumatic cylinder respectively. The guide ring preferably extends substantially around the entire circumference of the piston head. However, a guide ring being or comprising one or more ring segments is also preferred. Guide rings are usually made from a low friction material such as a polymer, preferably PA 6.6, PA6 or PTFE. Once worn, the guide ring may be changed. By fixing the magnet to the guide ring, assembly of the magnet on the piston head is facilitated. For example, the magnet may be attached to the guide ring prior to assembly of the guide ring on the piston head. This is particularly advantageous for small magnets. The magnet is fixed to the guide ring so that it cannot move relative thereto. When the guide ring is axially fixed to the piston head in the axial direction but at least partially rotatable relative to the piston head about the central axis, the above-described advantages apply. The piston head may rotate relative to the magnet to allow for individual alignment of the magnet and the piston head within the pneumatic chamber.

Preferably, the guide ring comprises at least one primary guide element of the magnet guide. The guide ring is adapted for guiding the piston head along the central axis within the pneumatic chamber. It is therefore configured for movement relative to the inner cylinder wall. Providing the primary guide element can increase the lifetime of the actuator, as the guide ring may be formed from a low friction material. The magnet guide feature may therefore be integrated into the already present guiding function of the guide ring with respect to the piston head.

According to a preferred further development, the magnet is received in a pocket of the guide ring. The pocket preferably surrounds the magnet on at least two sides, preferably on all but one side, particularly preferred on all sides. The pockets prevents damages to the magnet received therein. Moreover, providing the magnet in a pocket of the guide ring facilitates exact axial positioning of the magnet with regard to the magnetic positioning sensor. This increases measurement accuracy of the relative position of the piston head within the pneumatic chamber and/or facilitates assembly. The magnet may be glued into the pocket. In other embodiments, the magnet may be glued to a radial inner face of the guide ring.

Preferably, the guide ring is injection-mold around the magnet and/or the magnet is extrusion-coated by the guide ring. The guide ring may be formed from a moldable material. Preferably, the guide ring is formed by injection molding. For example, the guide ring may be formed from PTFE. A guide ring injection-mold around the magnet may partially or entirely enclose the magnet. Analogously a magnet extrusion-coated by the guide ring may be fully or partially enclosed by the material of the guide ring. Preferably, the guide ring is fully enclosed by the guide ring. Injection-molding and/or extrusion-coating facilitate manufacturing of a guide ring comprising a magnet. The guide ring prevents damages to the magnet and therefore increases reliability of the pneumatic actuator.

In a further preferred embodiment, the guide ring comprises a radial protrusion extending towards the central axis, wherein the pocket is at least partially arranged in the radial protrusion. Preferably, the pocket is entirely arranged in the radial protrusion. By arranging the magnet in the protrusion, the position of the magnet with respect to the guide ring is known, in particular if the guide ring surrounds the magnet on all sides. This facilitates alignment of the magnet with regard to the magnetic position sensor. The pocket of the guide ring receiving the magnet may form a locally enlarged portion of the guide ring. This allows for an overall guide ring design having an optimized material consumption. A protrusion extending towards the central axis protrudes from a radial inner surface of the guide ring towards the central axis. It is preferably arranged opposite to a guide surface of the guide ring sliding along the inner cylinder wall.

According to an embodiment, the guide ring is at least partially received in a circumferential piston groove of the piston head. Preferably, the guide ring protrudes from the piston groove in the radial direction. The radial direction is perpendicular to the central axis. A guide ring partially protruding from the piston head in the radial direction prevents the piston head from rubbing on the inner cylinder wall of the pneumatic piston and thus reduces wear on the piston head and the inner cylinder wall. The piston groove may extend around the entire circumference of the piston head. In other embodiments, the piston groove extends only partially around the circumference of the piston head. Preferably, a width of the piston groove in the axial direction substantially matches an axial height of the guide ring. It shall be noted that small differences in the width of the piston groove and the matching axial height of the guide ring may be possible due to manufacturing tolerances and to facilitate insertion of the guide ring into the piston groove. An axial height of the guide ring matching an axial width of the piston groove ensures axial alignment of the guide ring with respect to the piston head. Through this, the guide ring and the magnet respectively can be fixed to the piston head in an axial direction while allowing rotation about the central axis. However, it shall be noted that other forms of axial fixation are also preferred.

Preferably, the piston groove comprises a receptacle extending towards the central axis, wherein the magnet is received in the receptacle. The receptacle may be formed as a section of the piston groove having an increased radial depth. Preferably, the protrusion of the guide ring is received in the receptacle. By providing a receptacle, the remainder of the piston groove may be formed more shallow. Through this an overall strength of the piston may be increased. Moreover, machining of the piston is facilitated. The receptacle further protects the magnet received therein from damages.

According to a preferred embodiment of the invention, an angular receptacle length of the receptacle is larger than an angular protrusion length of the radial protrusion and/or an angular magnet length of the magnet. The angular receptacle length is measured as an angle between two end points of the receptacle opposite each other in the circumferential direction (between two radial lines connecting the two opposing ends to the central axis respectively). The angular protrusion length and the angular magnet length are measured analogously as the angle between two ends of the protrusion or angle respectively opposite each other in the circumferential direction. If the angular receptacle length is larger than the angular protrusion length, the protrusion may slide within the receptacle. The protrusion receiving the magnet can thus rotate relative to the piston head about the central axis even if it is received in the receptacle. The radial protrusion and/or the magnet are then at least partially rotatable around the central axis within the protrusion.

In a preferred further development, the guide ring is an open ring. Preferably, the open ring has an angular length of 300° or more, preferably 330° or more. An open ring comprises an open ring section defined between two opposing circumferential ends of the guide ring. This section facilitates assembly of the guide ring as the open ring section may be opened up for inserting the piston head.

Preferably, the pneumatic actuator further comprises a cylinder sleeve at least partially forming an inner wall of the pneumatic cylinder defining the pneumatic chamber, wherein the guide ring slides at least partially along the cylinder sleeve during axial movement of the piston head in the pneumatic chamber. A cylinder sleeve may be separately formed from a main cylinder body. The cylinder sleeve may be changed once worn. Furthermore, a cylinder sleeve can be used to adapt the main cylinder body to different uses cases. For example, by providing two cylinder sleeves having different thicknesses, the same main cylinder body may be used for piston heads having different diameters. The cylinder sleeve is preferably formed from a metal and/or a plastic material. The cylinder sleeve may define the entire inner wall of the pneumatic cylinder, a cylindrical surface of the pneumatic cylinder and or any other section of the inner wall defining the pneumatic chamber. Preferably, the cylinder sleeves defines a cylindrical wall section of the pneumatic chamber.

In a preferred further development, the cylinder sleeve has a fixed angular position relative to the magnetic position sensor and comprises at least one secondary guide element of the magnet guide. Preferably, the cylinder sleeve is fixed to a main body of the pneumatic cylinder. A cylinder sleeve having a fixed angular position relative to the magnetic position sensor is prevented from rotating about the central axis relative to the magnetic position sensor. Since the rotational orientation (or angular orientation respectively) of the cylinder sleeve is fixed relative to the magnetic position sensor, it can guide the magnet to ensure proper angular alignment of the magnet relative to the sensor. It shall be noted that the secondary guide elements could also be provided on other elements than the cylinder sleeve. Preferably, the secondary guide element of the cylinder sleeve is a guide groove in the cylinder sleeve. The guide groove preferably extends along the central longitudinal axis. The guide groove may have a rounded bottom. Preferably, the guide groove has a U-shape or semi-circular shape in a cross-section substantially perpendicular to the central axis. In other embodiments, the guide groove may have a rectangular or triangular cross-section. It shall be noted that a secondary guide elements formed as a groove is also preferred for embodiments of the pneumatic actuator not having a cylinder sleeve.

According to a preferred embodiment, the magnet guide comprises two or more sets of corresponding primary guide elements and secondary guide elements. A set of guide elements each comprises a primary guide element and a corresponding secondary guide element. Multiple sets of guide elements ensure proper alignment and further reduce the risk for miss-alignments. Preferably, the sets of corresponding primary guide elements and secondary guide elements are evenly distributed around the central axis. For example and preferably, the magnet guide may comprises three primary guide elements and three secondary guide elements corresponding thereto, wherein each pair of guide elements is spaced apart from each other about the central axis by an angular section of 120°. Preferably, the guide ring comprises at least two guide protrusions, guide ridges or guide projections extending in the radial direction away from the central axis, each guide projection forming a primary guide element. These guide projections may be received in corresponding guide grooves of the inner cylinder wall, preferably of a wall section of the inner cylinder wall formed by the cylinder sleeve. Preferably, the guide groove has a negative shape of the corresponding guide projection. For example, a guide projection may be arc shaped and the guide groove may have an inverted arc shaped cross-section.

According to a second aspect of the invention, the above stated problem is solved by a gearbox, in particular a gearbox for a commercial vehicle, comprising a pneumatic actuator according to any of the described embodiments according to the first aspect of the invention. Preferably, a main cylinder body of the pneumatic actuator is integrally formed with a housing of the gearbox. However, pneumatic actuators attached to a housing of the gearbox via connection elements such as screws or rivets are also preferred. Moreover, the pneumatic cylinder may also be partially or fully welded to the housing of the gearbox. Particularly preferred the pneumatic actuator is received inside the housing of the gearbox. The pneumatic piston, other elements of the actuator or the functional element arranged in an interior of the gearbox do not penetrate the gearbox housing. Sealing of the gearbox housing is thereby facilitated and reliability is increased.

In a third aspect of the invention the above stated problem is solved by a commercial vehicle comprising a gearbox according to the second aspect of the invention. It shall be understood that the pneumatic actuator according to the first aspect of the invention, the gearbox according to the second aspect of the invention and the vehicle according to the third aspect of the invention preferably have similar or equal aspects, in particular as they are described in the dependent claims. Thus, reference is made to the above description of the pneumatic actuator according to the first aspect of the invention.

According to a fourth aspect, the invention solves the above stated problem through an assembly method for a pneumatic actuator, preferably a pneumatic actuator according to the first aspect of the invention. The assembly method comprises the following steps: providing a pneumatic cylinder comprising a pneumatic chamber having a central axis; providing a pneumatic piston comprising a piston head and a piston rod, the piston head preferably having a receptacle; providing a magnetic sensor on the pneumatic cylinder for detecting a relative position of the pneumatic piston to the pneumatic cylinder; arranging a magnet on the piston head, preferably in the receptacle of the piston head, for cooperation with the magnetic sensor; inserting the piston head of the pneumatic piston into the pneumatic chamber so that the pneumatic piston is slidably received in the pneumatic chamber. During or by insertion of the piston head into the pneumatic chamber the magnet is rotationally fixed about the central axis. After insertion of the piston head into the pneumatic chamber, the piston head is at least partially rotatable about the central axis and configured to axially displace the magnet upon movement of the piston head along the central axis. Preferably, the magnet is rotationally fixed about the central axis during insertion of the piston head into the pneumatic chamber by engaging one or more primary guide elements associated to the magnet with one or more corresponding secondary guide elements associated to the pneumatic chamber. For example and preferably, guide projections of a guide ring to which the magnet is fixed can be inserted into corresponding guide grooves in an inner cylinder wall of the pneumatic cylinder at least partially defining the pneumatic chamber. The method may further comprise: rotating the piston about its central axis (that may be identical to the central axis of the pneumatic chamber after insertion) to a predetermined position. Rotation of the piston is preferably performed after insertion of the piston head into the pneumatic chamber. The method can further comprise: fixing the piston head in the predetermined angular position, preferably by connecting the piston shaft to the functional element.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
- Fig. 1: shows a cut view of a first embodiment of a pneumatic actuator;
- Fig. 2: shows a detail of Fig. 1;
- Fig. 3a: shows a cut view of an example pneumatic actuator having a fixed magnet;
- Fig 3b: shows a cross-section of the actuator of Fig. 3a;
- Fig. 3c: shows a cross-section of the actuator of Fig. 3a with the angular orientation of a piston head of the conventional actuator differing from the angular orientation shown in Fig. 3b;
- Fig. 4: shows a guide ring of the first embodiment of the pneumatic actuator;
- Fig. 5a: shows a cross-section of the first embodiment of the pneumatic actuator perpendicular to the cut view of Fig. 1,
- Fig. 5b: shows a cross-section of the first embodiment of the pneumatic actuator with the angular orientation of a piston head of the pneumatic actuator differing from the angular orientation shown in Fig. 5a;
- Fig. 6: shows a cut view of a second embodiment of the pneumatic actuator;
- Fig. 7: shows a commercial vehicle having a gearbox comprising a pneumatic actuator according to the first or second embodiment; and
- Fig. 8: shows a block diagram illustrating an assembly method for a pneumatic actuator.

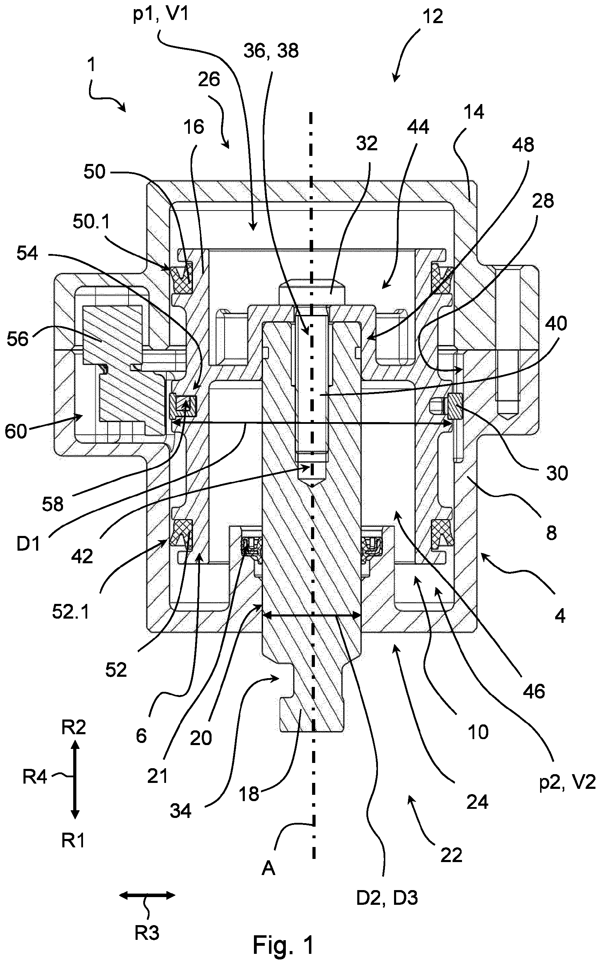

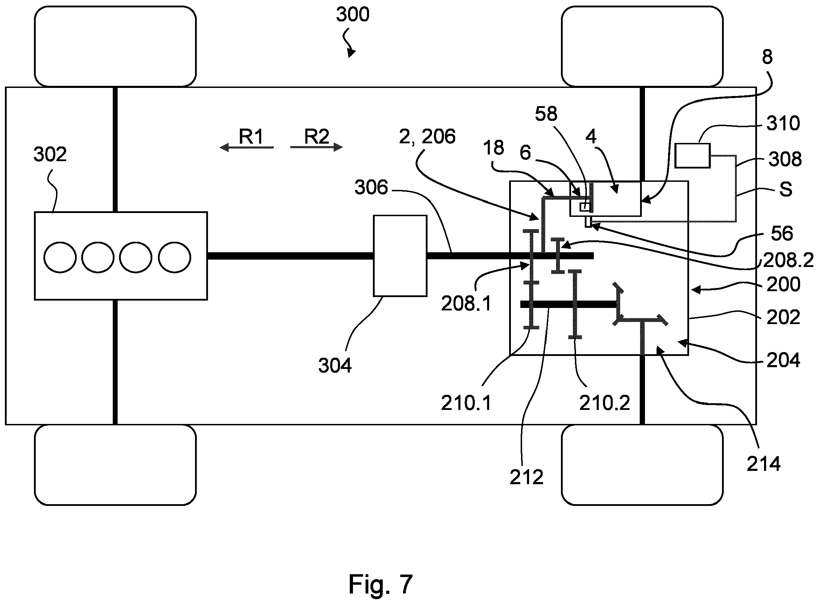

A pneumatic actuator 1, in particular a pneumatic actuator 1 for actuating a functional element 2 of a gearbox 200, comprises a pneumatic cylinder 4 and a pneumatic piston 6. A cylinder body 8 of the pneumatic cylinder 4 defines a pneumatic chamber 10, having a central axis A. On a first side 12, the pneumatic chamber 10 is closed by a cylinder head 14 of the pneumatic cylinder 4. In the embodiment of the pneumatic actuator 1 shown in Fig. 1, the piston head 14 partially forms the pneumatic chamber 10. The pneumatic cylinder 4 is integrally formed with a housing 202 of the gearbox 200. The pneumatic actuator 1 is received inside an interior 204 of the gearbox 200 (cf. also Fig. 7).

A piston head 16 of the pneumatic piston 6 is received in the pneumatic chamber 10 of the pneumatic cylinder 4. The piston head 16 is connected to a piston rod 18 of the pneumatic piston 6 that extends through a cylinder orifice 20 of the pneumatic cylinder 4 on a second side 22 opposite the first side 12. A maximum outer diameter D1 of the piston head 12 is larger than a corresponding inner diameter D2 of the cylinder orifice 20. During assembly of the pneumatic actuator 1 the pneumatic piston 6 is inserted from the first side 12 through a head opening 26. After insertion of the pneumatic piston 6, the head opening 26 of the pneumatic chamber 10 is closed by the cylinder head 14. However, the inner diameter D2 of the cylinder orifice 20 may also correspond to the maximum outer diameter D1 of the piston head 14 such that the pneumatic piston 6 can be inserted into the pneumatic chamber 10 from the second side 22 through the cylinder orifice 20. In the present embodiment, however, the inner diameter D2 of the cylinder orifice 20 substantially matches an outer rod diameter D3 of the piston rod 18. The piston rod 18 is guided in the cylinder orifice 20, which prevents tilting of the piston head 14 in the pneumatic chamber 10. A small gab may be arranged between the cylinder orifice 20 and the piston rod 18 to reduce friction. An oil seal 21 is provided around the piston rod 18 to prevent oil from entering or leaving the pneumatic chamber 10.

In the embodiment of Fig. 1, an inner wall 28 of the pneumatic cylinder 4 partially defining the pneumatic chamber 10 is formed by the cylinder body 8. The piston head 12 and an interior surface of the cylinder head 10 enclose a first volume V1. For moving the pneumatic piston 6, compressed air at a first pressure p1 is provided to the first volume V1. Opposite the first volume V1, a second volume V2 is defined in the pneumatic chamber 10. If the first pressure p1 exceeds a second pressure p2 in this second volume V2, the first volume V1 is increased and the pneumatic piston 6 performs a positive stroke in a positive stroke direction R1. The piston rod 18 received in the cylinder orifice 20 guides the pneumatic piston 6 such that the positive stroke direction R1 is parallel to the central axis A. Additionally, the pneumatic piston 6 comprises a guide ring 30 guiding the piston head 16 along the inner wall 28. It shall be noted that only the guide ring 30 may be provided for guiding the pneumatic piston 6 and/or other guiding features may be provided. For performing a negative stroke of the pneumatic piston 6 in a negative stroke direction R2 opposite the positive stroke direction R1, a second pressure p2 larger than the first pressure p1 is provided to the second volume V2. Additionally or alternatively, the first pressure p1 in the first volume V1 may be reduced below the second pressure p2, for example by providing a vacuum to the first volume V1. However, movement of the pneumatic piston 6 in the positive stroke direction R1 and/or the negative stroke direction R2 may also be achieved and/or assisted by a biasing member, such as a spring.

By applying varying pressures p1, p2 to the first volume V1 and/or the second volume V2, the pneumatic piston 6 slidably received in the pneumatic chamber 10 is movable back and forth along the central axis A with regard to the pneumatic cylinder 4. On a functional end opposite the piston head 16, the piston rod 18 engages the functional element 2 (see Fig. 7). The piston rod 18 transmits the movement of the piston head 16 to the functional element 2. When the pneumatic piston 6 performs a positive stroke in the positive stroke direction R1, the functional element 2 engaging the piston rod 18 is actuated and moved in the positive stroke direction R1 as well. During a negative stroke of the piston 6 in the negative stroke direction R2, the functional element 2 is also moved in the negative stroke direction R2. In other embodiments, movement of the pneumatic piston 6 in the positive stroke direction R1 may cause movement of the functional element 2 in a transverse or opposite direction. This may be achieved by connecting the piston rod 18 and the functional element 2 by a lever or other transmission element.

For engaging the functional element 2, the piston rod 18 comprises a connection groove 34. In this embodiment and preferably, connection groove 34 is a substantially u-shaped groove. Additionally or alternatively, the piston rod 18 may also comprise a radial projection (not shown) for engaging the functional element 2. The connection groove 34 extends along the entire circumference of the piston rod 18. However, the connection groove 34 may also extend only partially around the circumference of the piston rod 18.

In the present embodiment, the pneumatic piston 6 is a two-part construction. The piston head 16 and the piston rod 18 are manufactured independently and attached to each other upon assembly of the pneumatic piston 6. A connector 36 attaches the piston head 16 to the piston rod 18. Here, the connector 36 is a screw 38 having a threaded shaft 40 and a screw head 32. The threaded shaft 40 comprises an external thread that is received in a corresponding internal thread of a bore 42 in the piston rod 18. The shaft 30 extends through the piston head 12 while the screw head 32 abuts a first front face 44 of the piston head 16. In the embodiment of Fig. 1, the first front face 44 is oriented towards the cylinder head 14. Opposite the first front face 44, the piston head 16 comprises a second front face 46.

The piston rod 18 is partially received in a rod recess 48 of the second front face 46. In other embodiments, the piston rod 18 may directly abut the second front face 46 without being received in a rod recess 48. During assembly of the pneumatic actuator 1, the piston head 16 is attached to the piston rod 18 and then the assembled pneumatic piston 6 is inserted in the pneumatic cylinder 4 from the first side 10. Since, the piston rod 18 is removable connected to the piston head 16, it may also be inserted from the second side 22 before attaching it to the piston head 16. Depending on the layout of the gearbox 200, this may facilitate assembly. Hence, the two part-construction of the pneumatic piston 6 allows for a versatile arrangement. The same design of the pneumatic actuator 1 may be used for different gearbox designs.

After insertion of the pneumatic piston 6, the pneumatic chamber 10 is closed by the cylinder head 14. The cylinder head 14 is fixed to the cylinder body 8 via screws extending through corresponding screw holes in the cylinder head 14. Additionally or alternatively, the cylinder head 14 may comprise a second external thread corresponding to a second internal thread of the cylinder body 8 or vice versa. For sealing the first volume V1, a sealing element may be arranged between the cylinder body 8 and the cylinder head 14.

To prevent compressed air from leaking out of the first volume through a gap formed between the piston head 16 and the inner wall 28, the piston head 16 comprises two lip seals 50, 52. The lip seals 50, 52 are oriented in opposite directions. A leg 50.1 of the first lip seal 50 extends in the positive stroke direction R1 while a leg 52.1 of the second lip seal 52 extends in the negative stroke direction R2. The legs 50.1, 52.1 abut the inner wall 28 defining the pneumatic chamber 10 and ensure sealing of the first volume V1. The small gap formed between the piston head 16 and the inner face 22 is provided to reduce friction between the piston head 16 and the inner wall 28 defining the pneumatic chamber 10.

As mentioned above, the pneumatic piston 6 comprises a guide ring 30. The guide ring 30 is arranged between the lip seals 50, 52 in an axial direction along the central axis A. The guide ring 30 is configured to slide along the inner wall 28. To reduce friction, the guide ring 30 is formed from a low friction material. In the present embodiment, the guide ring 30 is formed from PTFE. The guide ring 30 may also be considered to form a sliding bearing. Alternatively or additionally, the piston head 12 may also contact the inner wall 28 for guiding the pneumatic piston 6.

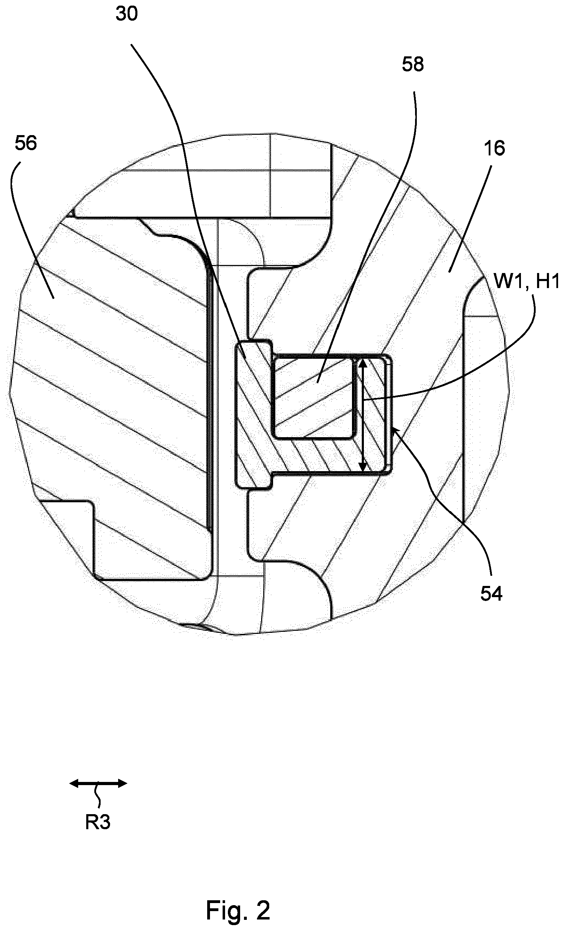

The guide ring 30 is partially received in a circumferential piston groove 54 of the piston head 16. The piston groove 54 extends around the entire circumference of the piston head 16. Piston grooves 54 only partially extending around the circumference of the piston head 16 are also preferred. Fig. 2 shows a detail of the piston groove 54. The guide ring 30 is partially received in the piston groove 54 and protrudes therefrom in a radial direction R3. The radial direction R3 is perpendicular to the central axis A of the pneumatic chamber 10. An axial width W1 of the piston groove 54 (or groove width W1) substantially equals an axial height H1 of the guide ring 30 received therein. The matching sizes of the piston groove 54 and the guide ring 30 or the axial height H1 of the guide ring 30 substantially equaling the groove width W1 fixes the guide ring 30 relative to the piston head 16 in the axial direction along the central axis A. The guide ring 30 is coupled to the piston groove 54 such that movement of the pneumatic piston 6 along the central axis A also causes corresponding movement of the guide ring 30 along the central axis A. The guide ring 30 and a magnet 58 fixed thereto cannot move along the central axis A independently of the piston head 16. Axial fixation of the guide ring 30 to the piston head 16 prevents misalignments and reduces wear of the guide ring 30 an/or the inner wall 28. The guide ring 30 therefore substantially mirrors movement of the pneumatic piston 6 along the central axis A.

For detecting a relative position of the pneumatic piston 6 to the pneumatic cylinder 4, in particular a position of the pneumatic piston 6 or the piston head 16 along the central axis A, the pneumatic actuator 1 comprises a magnetic position sensor 56 and the magnet 58 cooperating with the magnetic position sensor 56. The position sensor 56 is adapted to detect the magnet 58. Preferably, the position sensor 56 is a Hall sensor. The position sensor 56 is received in a sensor cavity 60 of the cylinder body 8. The sensor cavity 60 is arranged laterally to the pneumatic chamber 10. In the embodiment shown in Fig. 1, the sensor cavity 60 is open towards the pneumatic chamber 10. This enables the magnetic position sensor 56 to be arranged close to the pneumatic chamber 10. No stationary walls or the like of the pneumatic cylinder 4 are arranged in between the magnetic position sensor 56 and the magnet 58. This allows for a very exact measurement of the relative position of the magnet 58 with respect to the sensor 56 ( or a strong signal strength of the sensor 56 respectively). Usually a signal strength and/or measurement quality of the magnetic position sensor 56 increases as the relative distance between the magnetic position sensor 56 and the magnet 58 decreases. The magnet 58 is therefore preferably rotationally aligned to the magnetic position sensor 56. For example, the magnet 58 and the magnetic position sensor 56 are rotationally aligned, when at least one straight line perpendicular to the central axis A extends through both the magnetic position sensor 56 (or a measurement section thereof respectively) and the magnet 58.

The magnet 58 is arranged at the same axial location of the piston head 16 as the guide ring 30. According to the first embodiment, the magnet 58 is received in a receptacle 62 of the piston groove 54. This allows for close proximity of the magnet 58 and the magnetic position sensor 56 during operation of the pneumatic actuator 1. Since the guide ring 30 is also received in the piston groove 54, small tilts of the pneumatic piston 6 with regard to the central axis A do not adversely affect measurement quality of the magnetic position sensor 56.

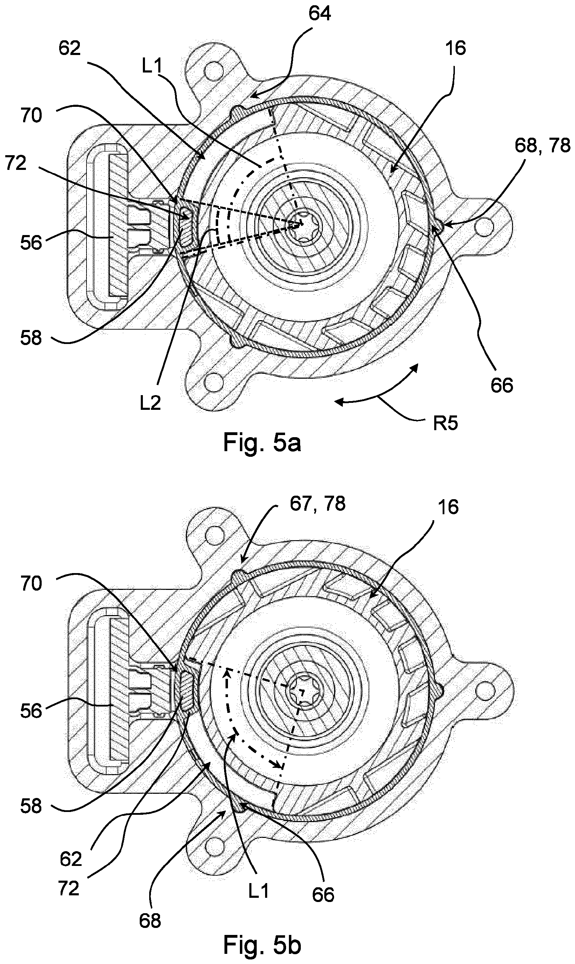

To ensure correct measurement results of the magnet position sensor 56 or a corresponding controller 316 receiving signals from the magnet position sensor 56 respectively, rotational alignment of the magnet 58 to the sensor 56 is important. In the present embodiment of the pneumatic actuator 1, rotational alignment is ensured by a magnet guide 64 having primary guide elements 66 and secondary guide elements 68 (see Figs. 5a and 5b

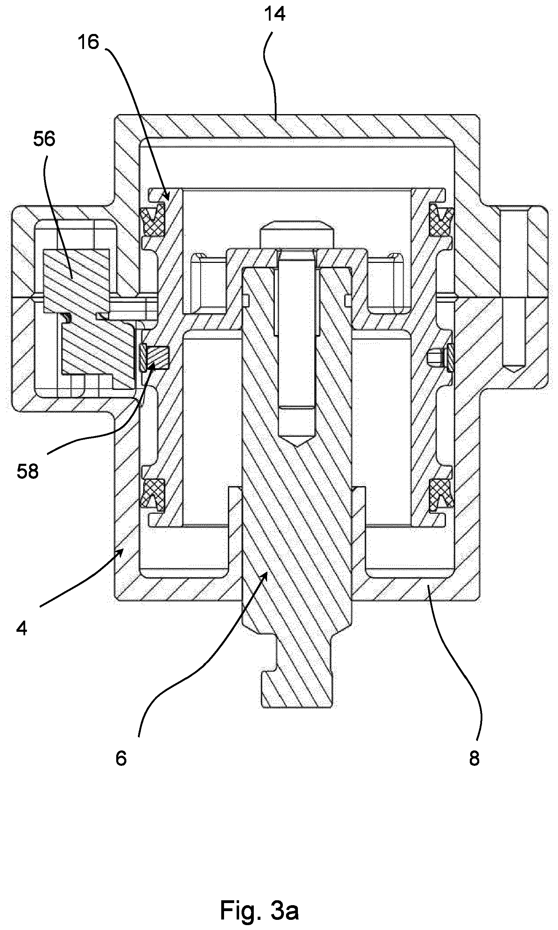

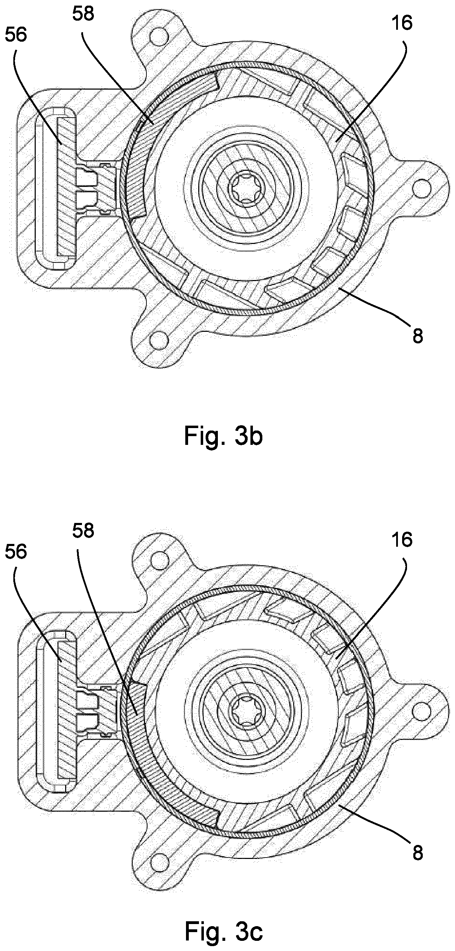

In some examples of magnetic actuators different to the pneumatic actuator as defined in claim 1, the magnet 58 is completely fixed to the piston head 16 so that rotation of the magnet 58 relative to the piston head 16 about the central axis A is inhibited. To allow for different angular positions of the piston head 16 with regard to the pneumatic cylinder 4, such alternative examples of magnetic actuators comprise magnets that span large sections of a circumference of a corresponding piston head 16. Such an arrangement is shown in Figs. 3a through 3c, wherein similar reference signs are used for the sake of simplicity wherever appropriate. However, as magnets 58 are usually formed from high cost materials, providing large magnets results in high overall cost of such magnetic actuators different to the pneumatic actuator as defined in claim 1. Fig. 3a shows a cross section of such a magnetic actuator similar to the cut view shown in Fig. 1. Cut views of this actuator perpendicular to the central longitudinal axis A are shown in Figs. 3b and 3c. As shown in Figs. 3b and 3c, providing a large magnet 58 allows for different angular orientations of the piston head 16 with regard to the magnetic position sensor 56. That is, the piston head 16 may be inserted into the pneumatic chamber 10 in a first angular orientation shown in Fig. 3b or in a second angular orientation shown in Fig. 3c, wherein the piston head 16 and the magnet 58 fixed thereto are rotated about the central axis A by about 90° counter clockwise in Fig. 3c with regard to Fig. 3b.

In the pneumatic actuator 1 according to the invention, the magnet 58 is relatively fixed to the piston head 16 in an axial direction R4 along the central axis A. However, the magnet 58 is at least partially rotatable about the central axis A relative to the piston head 16. Through this, a much smaller magnet 58 can be aligned to the magnetic position sensor 56 for different orientations of the pneumatic piston 6. In the embodiments shown in Figs. 1, 2 and 4 to 6, the magnet 58 may slide in the receptacle 62 in a circumferential direction R5 about the central axis A. In particular, the magnet 58 is received in a pocket 70 of the guide ring 30 that forms a radial protrusion 72 of the guide ring 30. The magnet 58 is over-molded by the plastic material of the guide ring 30. The pocket 70 is a closed pocket that is closed on all sides so that the magnet 58 is entirely surrounded by the material of the guide ring 30. The guide ring 30 protects the magnet 58 from damages. The plastic material of the guide ring 30 has little to no adverse effect on the measurement quality of the signals provided by the magnetic position sensor 56. In other embodiments, the pocket 70 may have an opening for inserting the magnet 58. For example and preferably, the magnet 58 may be glued into the pocket 70.

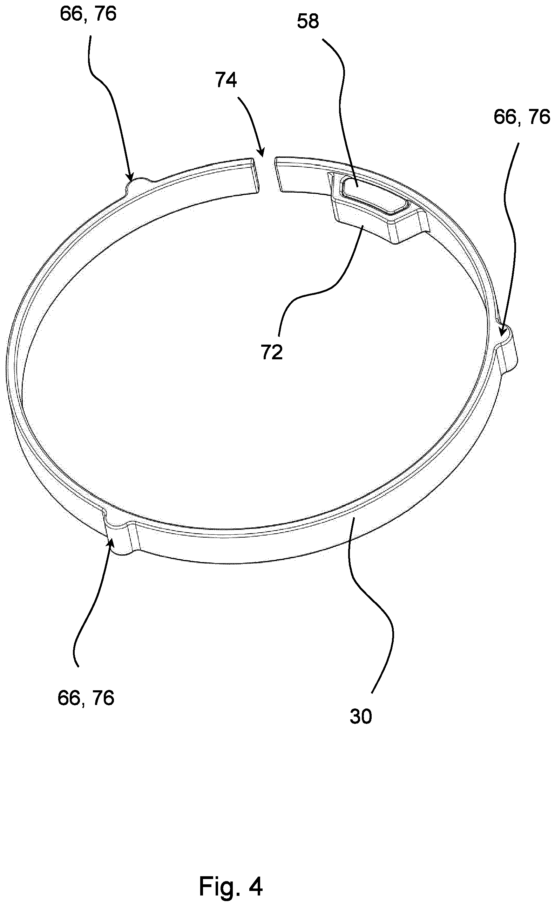

Fig. 4 shows the guide ring 30 having radial protrusion 72 extending towards the central axis A and magnet 58 received in the pocket 70. The guide ring 30 is an open ring having an open section 74 that facilitates mounting the guide ring 30 in the piston groove 54. The guide ring 30 has a substantially uniform radial thickness with the exception of the circumferential section comprising the radial protrusion 72 and three sections comprising primary guide elements 66. The primary guide elements 66 are formed as guide projections 76 having a semi-circular cross section. In other embodiments, the guide projections 76 may have a rectangular cross section. The primary guide elements 66 are evenly distributed about the circumference of the guide ring 30. Preferably, the magnet 58 is attached to the guide ring 30 at an equidistant spacing to neighboring primary guide elements 66. In other embodiments, the magnet 58 may be positioned closer to a first primary guide element 66 than to a second primary guide element 66. While an equidistant spacing may prevent assembly of the guide ring 30 in a wrong orientation, different distances may allow use of the guide ring 30 for multiple designs of the pneumatic actuator 1.

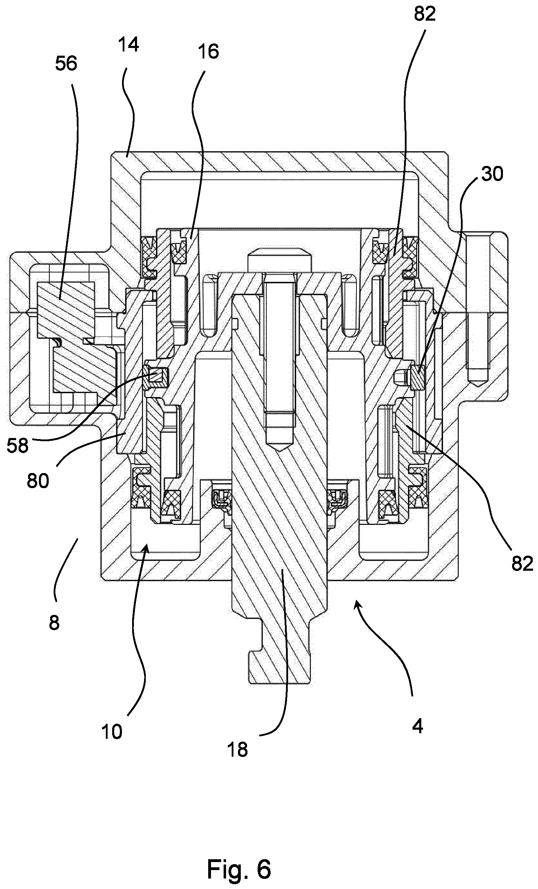

When the pneumatic piston 6 is inserted in the pneumatic chamber 10, the primary guide elements 66 engage corresponding secondary guide elements 68. In the first embodiment of the pneumatic actuator shown in Figs. 1, 2, 4, 5a and 5b, the secondary guide elements 68 are formed in the inner wall 28 of the cylinder body 8 defining the pneumatic chamber 10. In this embodiment, the secondary guide elements 68 are formed as axial guide grooves 78 extending parallel to the central axis A. The guide projections 76 of the guide ring 30 engage the guide grooves 78 and define a rotational position of the guide ring 30 within the pneumatic chamber 10. The guide ring 30 may slide along the central axis A but the magnet guide 64 prevents rotation of the guide ring 30 about the central axis A. As shown in Figs. 5a and 6b, which illustrate cross sections of the pneumatic actuator 1 perpendicular to the central axis A, the magnet guide 64 of the first embodiment of the pneumatic actuator 1 comprises three sets of corresponding first and second guide elements 66, 68. The sets of corresponding guide grooves 78 and guide projections 76 are evenly spaced around the circumference of the pneumatic piston 6. As the magnet 58 is fixed to the guide ring 30 it is also prevented from rotating about the central axis A. The magnet guide 64 ensures correct alignment of the magnet 58 with the magnetic position sensor 56. It shall be noted, that in other embodiments, the primary or secondary guide elements 66, 68 may be formed on the magnet 58 itself.

Figs. 5a and 5b show similar cross-sections of the pneumatic actuator 1 with the exception that the piston head 16 is rotated by approximately 90° in the counter clockwise direction in Fig. 5b when compared to Fig. 5a. As can be seen from Figs. 5a and 5b, the angular position of the magnet 58 received in the pocket 70 of the guide ring 30 is the same in both orientations of the piston head 16. The magnet 58 is partially rotatable relative to the piston head 16 about the central axis A such that the piston head 16 can be rotated while the angular position of the magnet 58 is maintained. This allows for close proximity of the magnet 58 to the magnetic position sensor 56 in multiple angular orientations of the piston head 16. In the first embodiment of the pneumatic actuator 1, an angular receptacle length L1 of the receptacle 62 of the piston groove 54 is larger than a corresponding angular protrusion length L2 of the protrusion 72 of the guide ring 30 receiving the magnet 58. In the first embodiment shown in Figs. 5a and 5b, the angular receptacle length L1 is approximately 90° while the angular protrusion length is approximately 25°.

The protrusion 72 of the guide ring 30 can slide relative to the piston head 16 within the receptacle 62. The angular orientation of the magnet 58 is decoupled from the angular orientation of the piston head 16. In the embodiment of the invention shown in Figs. 5a and 5b, a much smaller magnet 58 can be used when compared to the conventional pneumatic actuator shown in Figs 3b and 3c.

Fig. 6 shows a second embodiment of a pneumatic actuator 1 according to the invention. The second embodiment of the pneumatic actuator 1 is similar to the pneumatic actuator 1 of the first embodiment shown in Figs. 1, 2 and 3 to 5b. The same reference numerals are applied to corresponding components and reference is made to the description of the first embodiment of a pneumatic actuator 1. The pneumatic actuator 1 shown in Fig. 6 additionally comprises two auxiliary pistons 82 received on the piston head 16 of the pneumatic piston 6. The auxiliary pistons 82 may slide relative to the piston head 16 for providing additional pneumatic functionalities of the pneumatic actuator 1. In the following, the description of the embodiment of the pneumatic actuator 1 shown in Fig. 6 is focused on the guidance of the piston head 16 within the pneumatic chamber 10.

The first and second embodiments of the pneumatic actuator 1 additionally differ with regard to the inner wall 28. In the pneumatic actuator 1 of the second embodiment, part of the inner wall 28 defining the pneumatic chamber 10 of the pneumatic cylinder 4 is formed by a cylinder sleeve 80. The cylinder sleeve 80 is fixed to the cylinder body 8 of the pneumatic cylinder 4. In the pneumatic actuator 1 according to the second embodiment, the secondary guide elements 68 are provided on the cylinder sleeve 80. Through this, a single design of the cylinder body 8 may be adapted to different use cases by modifying the cylinder sleeve 80. Moreover, the cylinder sleeve 80 may be replaced once worn. Preferably, the cylinder sleeve 80 is a metal sleeve and/or a sleeve formed from a plastic material. The secondary guide elements 68 are again formed as axial guide grooves 78. In the axial direction R4, the guide grooves 78 extend entirely through the cylinder sleeve 80. However, guide grooves 78 only partially extending through the cylinder sleeve along the central axis A are also preferred.

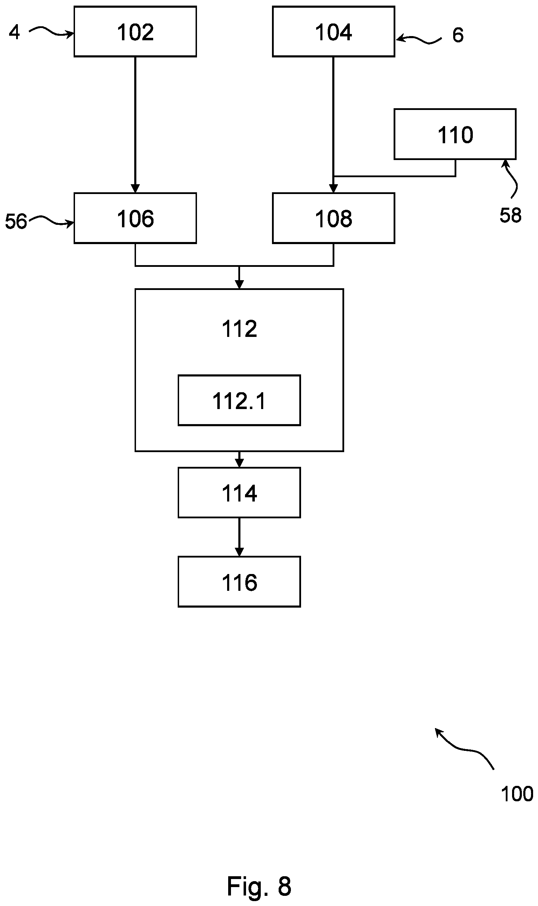

Figure 8 shows a commercial vehicle 300 having a motor 302, a gearbox 200 a clutch 304 and a drive shaft 306 connecting the clutch 304 and the gearbox 200. The pneumatic actuator 1 is arranged in the interior 204 of the gearbox 200. The piston shaft 18 protrudes from the pneumatic cylinder 4 and is connected to a functional element 2. In this embodiment, the functional element 2 is a shifting fork 206 of the gear box 200. Using the shifting fork 206, first gear wheels 208 of the gearbox 200 can be actuated and moved in the positive stroke direction R1 or the negative stroke direction R2. In Figure 8, the pneumatic piston 6 is in an outmost position and a larger first gear wheel 208.1 engages a smaller second gear wheel 210.1 of a driven shaft 212. By applying a second pressure p2 to the second volume V2, that is larger than the first pressure p1 in the first volume V1, the pneumatic piston 6 can be moved in the negative stroke direction R2. The shifting fork 206 also moves in the negative stroke direction R2. The shifting fork 206 slides the first gear wheels 208 along the shaft 212 and thereby the larger first gear wheel 208.1 is disengaged from the smaller second gear wheel 210.1 and a smaller first gear wheel 208.2 is brought into contact with a larger second gear wheel 210.2. Thereby a gear of the gearbox 100 is changed upon actuation of the pneumatic actuator 1.

The magnetic positon sensor 66 detects a position of the magnet 68 and provides a corresponding position signal S via cable 308 to the controller 310 of the vehicle 300. Since the position of the pneumatic piston 6 relative to the pneumatic cylinder 4 corresponds to the position of the functional element 2, the position signal S can be used to automatically control the gearbox 200.

The pneumatic actuator 1 is arranged in an interior 204 of the gearbox 200 and neither the piston shaft 18 nor the shifting fork 206 penetrates the housing 202 of the gearbox 200. Sealing of the gearbox 200 is thereby facilitated and leakage of oil 214 contained in the gearbox 200 is effectively prevented. The cylinder body 8 is integrally formed with the housing 202 of the gearbox 200. For example, the whole gearbox housing 202 including the cylinder body 8 can be casted in one piece.

Figure 8 illustrates an assembly method 100 for a pneumatic actuator 1. In a first step, a pneumatic cylinder 4 comprising a pneumatic chamber 10 having a central axis A is provided (first step 102 in Fig. 8). In a second step 104 that may be performed parallel, prior or after the step 102, a pneumatic piston 6 having a piston head 16 and a piston rod 18 is provided. In a third step 106 a magnetic position sensor 56 is provided on the pneumatic cylinder 4 for detecting a relative position of the pneumatic piston 6 to the pneumatic cylinder 4. A magnet 58 is arranged on the piston head 16 for cooperation with the magnetic sensor 58 in a fourth step 108. The magnet 58 is preferably received in a pocket 70 of a guide ring 30. Prior to providing the magnet 58 on the piston head 16, the method 100 preferably comprises injection molding 110 of a guide ring 30, wherein the magnet 58 is surrounded by the material of the guide ring 30 during injection molding 110. The magnet 58 received in the pocket 70 is preferably arranged in a receptacle 62 of the pneumatic cylinder 6 during the fourth step 108.

The piston head 16 and the magnet 58 arranged thereon are then inserted into the pneumatic chamber 10 of the pneumatic piston 4 in a sixth step 112. The pneumatic piston 6 or its piston head 16 respectively is then slidably received in the pneumatic chamber 10 and may slide along the central axis A of the pneumatic chamber 10. During insertion of the piston head 16 into the pneumatic chamber 10, the magnet 58 is rotationally fixed about the central axis in a sub-step 112.1 of the sixth step 112. In the present embodiment of the assembly method 100, the magnet 58 is rotationally fixed about the central axis by engaging primary guide elements 66 of the magnet guide 64 with corresponding secondary guide elements 68 associated to the inner wall 28. Here, the primary guide elements 66 of the magnet guide 64 are guide projections 76 of the guide ring 30 and the secondary guide elements 68 are formed as guide grooves 78. In a seventh step 107 of the assembly method 100, the pneumatic piston 6 is rotated about the central axis A until a predefined rotational orientation of the pneumatic piston 6 is reached. The seventh step 114 may be performed prior to, during or after insertion of the piston head 16 into the pneumatic chamber 100. Preferably, the angular orientation of the pneumatic piston 6 is then fixed in an eighth step 116. After insertion of the piston head 16 into the pneumatic chamber 10, the piston head 16 and prior to the eighth step 116, the piston head 16 is partially rotatable about the central axis A. The piston head 116 is further configured to axially displace the magnet 58 upon movement of the piston head 116 along the central axis A. Fixation of the angular orientation of the pneumatic piston 6 may be achieved by connecting the pneumatic piston 6 to the functional element 2.

In the assembly method 100 according to the invention, an angular orientation of the magnet 58 relative to the magnetic position sensor 56 can be set independently from an angular orientation of the piston head 16 relative to the pneumatic cylinder 4, since the magnet 58 can at least partially rotate about the central axis A independently of the piston head 16 or vice versa. Through this, assembly of a pneumatic actuator 1 is facilitated.

### List of reference signs (Part of the description)

- 1: pneumatic actuator
- 2: functional element
- 4: pneumatic cylinder
- 6: pneumatic piston
- 8: cylinder body
- 10: pneumatic chamber
- 12: first side
- 14: cylinder head
- 16: piston head
- 18: piston rod
- 20: cylinder orifice
- 21: oil seal
- 22: second side
- 24: bottom
- 26: head opening
- 28: inner wall
- 30: guide ring
- 32: screw head
- 34: connection groove
- 36: connector
- 38: screw
- 40: shaft
- 42: bore
- 44: first front face
- 46: second front face
- 48: rod recess
- 50: first lip seal
- 50.1: leg of the first lip seal
- 52: second lip seal
- 52.1: leg of the second lip seal
- 54: circumferential piston groove
- 56: magnetic position sensor
- 58: magnet
- 60: sensor cavity
- 62: receptacle
- 64: magnet guide
- 66: primary guide element
- 68: secondary guide element
- 70: pocket
- 72: radial protrusion
- 74: open section
- 76: guide projections
- 78: axial guide grooves
- 80: cylinder sleeve
- 82: auxiliary piston
- 100: assembly method
- 102: first step of the assembly method
- 104: second step of the assembly method
- 106: third step of the assembly method
- 107: seventh step of the assembly method
- 108: fourth step of the assembly method
- 110: injection molding of a guide ring (fifth step of the assembly method)
- 112: sixth step of the assembly method
- 112.1: sub-step of the sixth step
- 114: seventh step of the assembly method
- 116: eighth step of the assembly method
- 200: gearbox
- 202: housing
- 204: interior
- 206: shifting fork
- 208: first gear wheels
- 208.1: larger first gear wheel
- 208.2: smaller first gear wheel
- 210.1: smaller second gear wheel
- 210.2: larger second gear wheel
- 212: driven shaft
- 214: oil
- 300: commercial vehicle
- 302: motor
- 304: clutch
- 306: drive shaft
- 308: cable
- 316: controller

- A: central axis
- D1: maximum outer diameter piston head
- D2: inner diameter piston orifice
- D3: outer rod diameter
- H1: axial height of the guide ring
- L1: angular receptacle length
- L2: angular protrusion length
- p1: first pressure
- p2: second pressure
- R1: positive stroke direction
- R2: negative stroke direction
- R3: radial direction
- R4: axial direction
- R5: circumferential direction
- S: position signal
- V1: first volume
- V2: second volume
- W1: axial width / groove width

## Claims

1. A pneumatic actuator (1) for actuating a functional element (2) including:
a pneumatic cylinder (4) comprising a pneumatic chamber (10) having a central axis (A),
a pneumatic piston (6) for actuating the functional element (2), the pneumatic piston (6) comprising
a piston head (16) slidably received in the pneumatic chamber (10), and
a piston rod (18) for connecting the piston head (16) to the functional element (2),
a magnetic position sensor (56) for detecting a relative position of the pneumatic piston (6) to the pneumatic cylinder (4); and
a magnet (58) cooperating with the magnetic position sensor (56),
wherein the magnet (58) is fixed relatively to the piston head (16) at least in an axial direction (R4) along the central axis (A) and at least partially rotatable relative to the piston head (16) about the central axis (A),
wherein the pneumatic actuator (1) further comprises a magnet guide (64), the magnet guide (64) comprising at least one primary guide element (66) and a corresponding secondary guide element (68) cooperating with the primary guide element (66) for rotationally aligning the magnet with the magnetic position sensor (56).

2. The pneumatic actuator (1) according to claim 1, wherein the pneumatic piston (6) comprises a guide ring (30) for guiding the piston head (16) in the pneumatic chamber (10), wherein the magnet (58) is fixed to the guide ring (30) and the guide ring (30) is relatively fixed to the piston head (16) in the axial direction () and at least partially rotatable relative to the piston head (16) about the central axis (A).

3. The pneumatic actuator (1) according to claim 2, wherein the guide ring (30) comprises at least one primary guide element (66) of the magnet guide (64).

4. The pneumatic actuator (1) according to claim 2 or 3, wherein the magnet (58) is received in a pocket (70) of the guide ring (30).

5. The pneumatic actuator (1) according to claim 4, wherein the guide ring (30) is injection-mold around the magnet (58) and/or the magnet (58) is extrusion-coated by the guide ring (30).

6. The pneumatic actuator (1) according to claim 4 or 5, wherein the guide ring (30) comprises a radial protrusion (72) extending towards the central axis (A), wherein the pocket (70) is at least partially arranged in the radial protrusion (72).

7. The pneumatic actuator (1) according to any of claims 2 to 6, wherein the guide ring (30) is at least partially received in a circumferential piston groove () of the piston head (16).

8. The pneumatic actuator (1) according to claim 7, wherein the piston groove () comprises a receptacle (62) extending towards the central axis (A), wherein the magnet (58) is received in the receptacle (62).

9. The pneumatic actuator (1) according to claim 8, wherein an angular receptacle length (L1) of the receptacle (62) is larger than an angular protrusion length (L2) of the radial protrusion (72) and/or an angular magnet length of the magnet (58).

10. The pneumatic actuator (1) according to any of claims 2 to 9, further comprising a cylinder sleeve (80) at least partially forming an inner wall (28) of the pneumatic cylinder (4) defining the pneumatic chamber (10), wherein the guide ring (30) slides at least partially along the cylinder sleeve (80) during axial movement of the piston head (16) in the pneumatic chamber (10).

11. The pneumatic actuator (1) according to claim 10, wherein the cylinder sleeve (80) has a fixed angular position relative to the magnetic position sensor (56) and comprises at least one secondary guide element (68) of the magnet guide (64).

12. The pneumatic actuator (1) according to any of claims 1 to 11, wherein the magnet guide (64) comprises two or more sets of corresponding primary guide elements (66) and secondary guide elements (68).

13. A gearbox (200), comprising a pneumatic actuator (1) according to any of the preceding claims 1 to 12.

14. A commercial vehicle (300) comprising a gearbox (200) according to claim 13.

15. Assembly method (100) for a pneumatic actuator (1), comprising the following steps:
- providing (102) a pneumatic cylinder (4) comprising a pneumatic chamber (10) having a central axis (A),
- providing (104) a pneumatic piston (6) comprising a piston head (16) and a piston rod (18), the piston head (16) having a receptacle (62)
- providing (106) a magnetic sensor (56) on the pneumatic cylinder (4) for detecting a relative position of the pneumatic piston (6) to the pneumatic cylinder (4);
- arranging (108) a magnet (58) in the receptacle (62) of the piston head (16) for cooperation with the magnetic sensor ();
- inserting (112) the piston head (16) of the pneumatic piston (6) into the pneumatic chamber (10) so that the pneumatic piston (6) is slidably received in the pneumatic chamber (10);
wherein during insertion (112) of the piston head (16) into the pneumatic chamber (10) the magnet (58) is rotationally fixed about the central axis (A), and wherein
after insertion (112) of the piston head (16) into the pneumatic chamber (10), the piston head (16) is at least partially rotatable about the central axis (A) and configured to axially displace the magnet (58) upon movement of the piston head (16) along the central axis (A)
